# EUROPÄISCHE PATENTANMELDUNG

(11) **EP 1 612 191 A1**
(43) Veröffentlichungstag der Anmeldung: **04.01.2006**
(21) Anmeldenummer: 05014142.3
(22) Anmeldetag: 30.06.2005
(51) Int. Cl.: C02F 3/12

(54) **Vollbiologische Kleinkläranlage nach dem SBR-Verfahren mit im Vorklärbehälter integriertem Reaktorbehälter**

(30) Priorität: 02.07.2004 DE 202004010466 U
(71) Anmelder: Bednarsch, Gerd, 98527 Suhl (DE)
(72) Erfinder: Bednarsch, Gerd, 98527 Suhl (DE)
(74) Vertreter: Engel, Christoph Klaus

(57) **Zusammenfassung**

Die Erfindung betrifft eine Kleinkläranlage nach dem SBR Sequence-Batch-Reaktor-Verfahren mit einem Vorklärbehälter (1), einem in diesem angeordneten Reaktorbehälter (2), einer Schmutzwasserzuleitung (4) in den Vorklarbehälter (1), einem vom Vorklärbehälter (1) in den Reaktorbehälter (2) verlaufenden Überlauf (9), durch welchen vorgeklärtes Abwasser bei Erreichen eines vorgegebenen Füllstandes im Vorklärbehälter (1) selbsttätig in den Reaktorbehälter (2) fließt, und mit einem zeitgesteuerten Klarwasserabzug (13, 14), über welchen Klarwasser zu vorgegebenen Zeiten aus dem Reaktorbehälter (2) abgepumpt wird.

## Beschreibung

Die vorliegende Neuerung betrifft eine vollbiologische Kleinkläranlage nach dem SBR Sequence-Batch-Reaktor-Verfahren mit einem Vorklärbehälter und einem innerhalb des Vorklärbehälters angeordneten Reaktorbehälter.

Das SBR-Verfahren ist ein im Aufstau betriebenes Belebungsverfahren, bei dem das Abwasser unter Einsatz von Belebtschlamm biologisch gereinigt wird. Die Abwasserreinigung erfolgt nicht wie bei sogenannten Durchlaufanlagen entlang einer räumlichen, sondern entlang einer zeitlichen Achse. Die Reinigungsprozesse sowie die Abtrennung des gereinigten Abwassers vom Belebtschlamm finden nacheinander in demselben Behälter statt.

Aus der GB 2 317 170 und der GB 2 317 168 ist ein SBR-Reaktor mit einem Absetztank und einem innerhalb des Absetztanks angeordneten aeroben Faultank bekannt. Das zu reinigende Wasser gelangt über einen Einfüllstutzen in den Absetztank. Über eine Pumpe, z. B. eine Mammutpumpe wird das Wasser aus dem Absetztank in den aeroben Faultank geleitet. Zwischen dem Absetztank und dem Faultank kann eine Transferkammer angeordnet sein, die mit Löchern versehen ist, welche das Eindringen von groben Feststoffen in die Transferkammer verhindern sollen. Eine gewisse Wassermenge gelangt in die Transferkammer und wird von dieser in den Faultank gepumpt. Das gereinigte Abwasser verlässt den Faultank über die Ausflussöffnung. Ein entscheidender Nachteil dieser Anordnung besteht darin, dass das vorgeklärte Abwasser in den Faultank gepumpt werden muss, wofür zusätzliche teure Pump- und Steuereinheiten erforderlich sind.

Die US 3,966,608 beschreibt einen Absetztank mit integriertem Reaktor, bei dem dass von Feststoffen befreite Abwasser durch eine Öffnung im Reaktorboden in den Reaktor gelangt und durch einen Kanal nach oben gesogen wird. Nach Erreichen des Kanalendes wird das Wasser nach unten durch eine Schicht mit Mikroorganismen geleitet, wobei es aerob digeriert wird. Anschließend wird das Wasser erneut durch den Kanal nach oben geleitet und durchläuft erneut die Mikroorganismenschicht. Dieser Vorgang wird mehrmals wiederholt.

In der DE 100 10 853 A1 ist eine sequentielle Abwasserkläranlage mit einem Becken mit drei, durch bewegliche Trennwände voneinander getrennten Bereichen beschrieben. Der erste Bereich dient als Vorspeicher, der zweite Bereich als SBR-Becken und der dritte als Ablaufbehälter. Als Trennwand zwischen den Bereichen kann eine wasserdichte flexible Folie dienen, die fest im Beckengrund und in den Seiten verankert ist. Die Folie kann sich wie ein Segel verwölben, um bei Überleitung von Wasser aus dem einen zu dem auf der anderen Seite der Folie gelegenen Bereich die Volumenänderungen der beiden Bereiche zu ermöglichen. Allerdings ist die Verwendung flexibler, nicht stabiler Trennwände immer nur dann möglich, wenn keine zu großen Druckunterschiede zwischen den abgetrennten Bereichen aufgrund unterschiedlicher Füllstände auftreten. Andernfalls besteht die Gefahr, dass die Trennwand zerstört wird.

Die DE 101 58 634 A1 zeigt eine SBR-Kläranlage mit einem Schachtgehäuse, das in eine Nachklärkammer, eine Vorklärkammer und eine Pufferkammer aufgeteilt ist. Die Kammern sind durch eine Trennwand voneinander getrennt. Über einen Zulauf wird das zu reinigende Abwasser zunächst in die Vorklärkammer geleitet, von dort gelangt es in die Pufferkammer und anschließend in die als Belebungskammer ausgebildete Nachklärkammer.

In der DE 199 51 194 A1 ist ein Mehrzweckschacht beschrieben, der unter anderem zum Aufbau einer Mehrkammern-Kleinkläranlage verwendet werden kann. Dazu müssen mehrere dieser Mehrzweckbehälter im Erdreich angeordnet und über Rohre und Steuerleitungen miteinander verbunden werden. Der Installationsaufwand ist somit nicht unerheblich. Probleme bereitet auch die dauerhafte exakte Ausrichtung der einzelnen Behälter zueinander, die für die füllstandsabhängige Funktion der Kleinkläranlage von besonderer Bedeutung ist.

Die Aufgabe der vorliegenden Neuerung besteht somit darin, eine vollbiologische Kleinkläranlage bereitzustellen, welche die Nachteile des Standes der Technik vermeidet und insbesondere eine leichte Installation der Anlage auch für Laien gestattet.

Diese Aufgabe wird durch die in den beigefügten Schutzansprüchen näher definierte vollbiologische Kleinkläranlage erfüllt, die sich insbesondere dadurch auszeichnet, dass durch Anordnung eines Reaktorbehälters innerhalb eines Vorklärbehälters ein integraler Aufbau erzielt wird. Für den Anschluss der neuerungsgemäßen Kleinkläranlage muss lediglich ein Behälter im Erdreich angeordnet und mit dem Zulauf, dem Ablauf sowie einem Stromversorgungsanschluss verbunden werden. Die beiden Teilbehälter der Kleinkläranlage sind fix zueinander angeordnet. Sämtliche Verbindungen zwischen diesen Teilbehältern können herstellerseitig fertiggestellt werden.

Ein fehlerhafter Anschluss der Kleinkläranlage beim Nutzer ist damit weitgehend ausgeschlossen. Außerdem bietet die integrierte Lösung den Vorteil, dass Transportkapazitäten besser ausgenutzt werden können.

Bei einer bevorzugten Ausführungsform wird der Vorklärbehälter durch einen sechs- oder achteckigen Schachtkörper mit einer Vielzahl von umlaufenden Profilierungen gebildet. An den Schachtkörper ist ein Schachtkopf angeformt, an welchem Rohranschlussabschnitte vorgesehen sind. Um den Reaktorbehälter in den Vorklärbehälter einzusetzen, wird der Vorklärbehälter nach der Herstellung vorzugsweise in seinem unteren Drittel aufgetrennt. Der vorzugsweise zylinderförmig oder ebenfalls achteckig gestaltete Reaktorbehälter kann nun am Boden des unteren Abschnitts des Vorklärbehälters befestigt, insbesondere angeschweißt werden. Anschließend wird der obere Teil des Vorklärbehälters wieder auf den getrennten Abschnitt aufgesetzt und mit diesem verschweißt. Bei abgewandelten Ausführungsformen kann ein Zwischenstück zwischen den unteren und oberen Abschnitt des Vorklärbehälters eingesetzt werden, insbesondere um das Verschweißen des aus Kunststoff bestehenden Behälters zu erleichtern und bei Bedarf das Gesamtvolumen des Vorklärbehälters zu vergrößern.

Es ist besonders vorteilhaft, wenn der Klarwasserabzug von einer Klarwasserpumpe bewirkt wird, die innerhalb des Reaktorbehälters angeordnet ist. Das dadurch aus der Kleinkläranlage abgegebene Klarwasser wird vorzugsweise über einen Probenbehälter geführt, aus welchem auch zeitversetzt Wasserproben der zuletzt abgeführten Wassermenge entnommen werden können. Zur Verringerung des Montageaufwandes ist es auch vorteilhaft, wenn die Klarwasserabgabe in einen vorhandenen Notüberlauf des Vorklärbehälters eingespeist wird. Für den Benutzer ist es dadurch ausreichend, ein einziges Abwasserrohr an die Kläranlage anzuschließen.

Die aktiven Einheiten der Kleinkläranlage werden bevorzugt an einer Aggregateeinheit oder schwimmend in einem Ponton befestigt, um eine schnelle Montage im Reaktorbehälter und eine Vereinfachung der Wartungsarbeiten zu erreichen.

Weitere Vorteile, Einzelheiten und Weiterbildungen ergeben sich aus der nachfolgenden Beschreibung einer bevorzugten Ausführungsform der neuerungsgemäßen Kleinkläranlage, unter Bezugnahme auf die Zeichnung. Es zeigen:
- Fig. 1: eine neuerungsgemäße vollbiologische Kleinkläranlage in einer Ansicht von oben;
- Fig. 2: die Kleinkläranlage in einer aufgeschnittenen Seitenansicht;
- Fig. 3: eine Prinzipdarstellung des Herstellungsschrittes der Kleinkläranlage, bei welchem ein Reaktorbehälter in einen Vorklärbehälter eingesetzt wird;
- Fig. 4: ein Ponton in einer vereinfachten Ansicht von oben, mit darin befestigten Aggregaten;
- Fig. 5: eine vereinfachte Seitenansicht des Pontons.

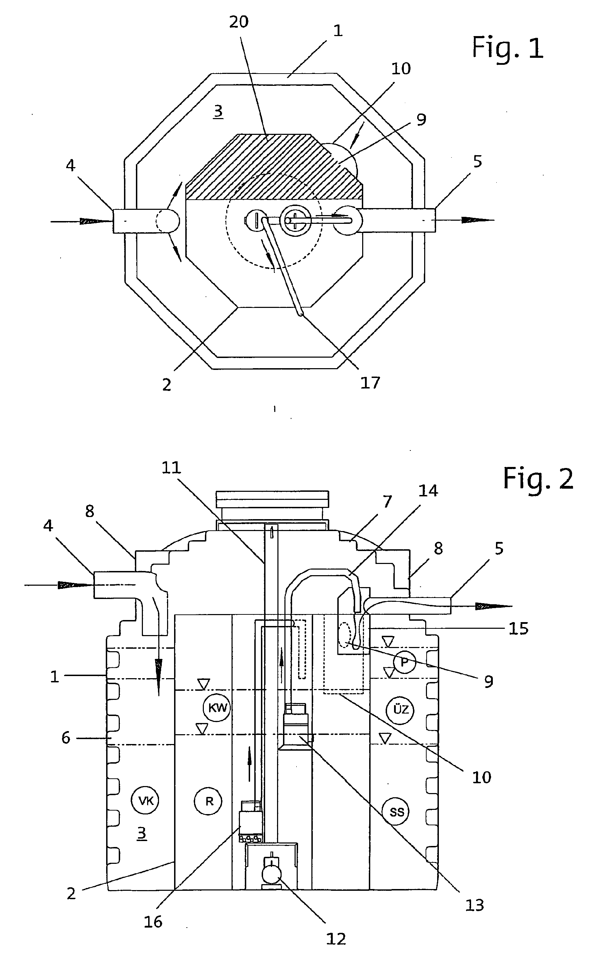

In Fig. 1 ist eine nach dem SBR-Verfahren arbeitende Kleinkläranlage in einer vereinfachten Ansicht von oben dargestellt. Diese Kleinkläranlage umfasst einen Vorklärbehälter 1, der bei der gezeigten Ausführungsform eine achteckige Querschnittsform aufweist. Innerhalb des Vorklärbehälters 1 ist ein Reaktorbehälter 2 angeordnet, der im vorliegenden Fall ebenfalls einen achteckigen Querschnitt besitzt, jedoch von geringerer Querschnittsfläche, so dass zwischen dem Reaktorbehälter 2 und der Innenwand des Vorklärbehälters 1 ein Hohlraum 3 für die Vorklärungsphase verbleibt.

Die beispielsweise im einem Haushalt entstehenden Abwässer werden der Kleinkläranlage über einen Einlauf 4 zugeführt, welcher in den Hohlraum 3 mündet. Außerdem besitzt die Kleinkläranlage einen Auslauf 5, über welchen das geklärte Wasser abfließt.

In Fig. 2 ist die Kleinkläranlage in einer vereinfachten Längsschnittdarstellung gezeigt. Daraus ist auch ersichtlich, dass der Vorklärbehälter 1 einen Schachtkörper umfasst, welcher umlaufende Profilierungen 6 zur Erhöhung der Stabilität des Vorklärbehälters besitzt. Es ist zu bedenken, dass die Kleinkläranlagen üblicherweise im Erdreich eingegraben werden und die Wandung des Vorklärbehälters in diesem Fall dem nicht geringen Erddruck standhalten muss. Außerdem besitzt der Vorklärbehälter 1 einen Schachtkopf 7, an dessen Seitenflächen Rohranschlussabschnitte 8 angeordnet sind.

Wie bereits erwähnt wurde, mündet der Einlauf 4 so in den Vorklärbehälter 1, dass das einfließende Abwasser in den Hohlraum 3 zwischen der Innenwand des Vorklärbehälters und der Außenwand des Reaktorbehälters einströmt. In diesem Hohlraum 3 laufen die üblichen Vorklärprozesse ab, wobei sich am Boden des Vorklärbehälters nach und nach eine Schlammschicht ansammelt, die bei Erreichen eines bestimmten Füllstandes abgesaugt werden muss. Oberhalb dieser Schlammschicht sammelt sich das Abwasser, bis ein Pegelstand erreicht ist, der das Abwasser in den Reaktorbehälter 2 eintreten lässt. Damit die auf dem Abwasser schwimmenden Stoffe nicht in den Reaktorbehälter eingeleitet werden, ist der Übergang zwischen dem Vorklärbehälter und dem Reaktorbehälter mit Hilfe eines Überlaufs 9 gestaltet, der beispielsweise durch eine Schutzwand 10 vor den aufschwimmenden Stoffen gesichert ist. Das von dem Vorklärbehälter 1 in den Reaktorbehälter 2 übergehende vorgeklärte Wasser wird also kurz unterhalb der Wasseroberfläche im Vorklärbehälter entnommen. An Stelle der Schutzwand 10 kann auch ein Überlauf verwendet werden, der als Tauchrohr in den Hohlraum 3 hineinragt.

In den Reaktorbehälter 2 ist eine vorkonfektionierte Aggregateeinheit 11 eingesetzt, die mehrere Aggregate trägt. Dazu gehört beispielsweise ein Belüfter 12, über welchen Sauerstoff bzw. Luft in den unteren Bereich des Reaktorbehälters eingebracht wird, um die den Klärvorgang begünstigenden Mikroorganismen mit Sauerstoff zu versorgen. Weiterhin ist eine Klarwasserpumpe 13 vorgesehen, mit Hilfe derer ein Klarwasserabzug nach dem erfolgten Klärvorgang vorgenommen wird. Der Klarwasserabzug erfolgt in bekannter Weise in zeitlich vorgegebenen Abständen, vorzugsweise nach einer längeren Ruhephase im Reaktorbehälter. Die Klarwasserpumpe 13 fördert eine bestimmte Menge Klarwasser aus dem Reaktorbehälter heraus. Um das Klarwasser in eine nachgeschaltete Kanalisation oder einen Sickerbereich abzugeben, wird es über eine Klarwasserabzugsleitung 14 in den Auslauf 5 eingespeist.

Der Auslauf 5 ist vorzugsweise oberhalb des maximalen Füllstandes im Vorklärbehälter angeordnet, so dass er gleichzeitig als Notüberlauf für den Vorklärbehälter dient.

Um die Qualität des abgegebenen Klarwassers kontrollieren zu können, mündet die Klarwasserabzugsleitung 14 in einen Probenbehälter 15, aus welchem dann das Klarwasser in den Auslauf 5 gelangt. Im Probenbehälter 15 verbleibt auch nach dem Abpumpen des Klarwassers eine bestimmte Menge des zuletzt abgepumpten Klarwassers, die für eine Untersuchung entnommen werden kann.

An der Aggregateeinheit 11 ist weiterhin eine Schlammpumpe 16 befestigt, mit welcher der Überschussschlamm in vorgegebenen Zeitabständen oder bei Erreichung eines bestimmten Pegels aus dem Reaktorbehälter 2 in den Vorklärbehälter 1 zurückgepumpt wird. Dafür ist eine Schlammleitung 17 (Fig. 1) vorgesehen.

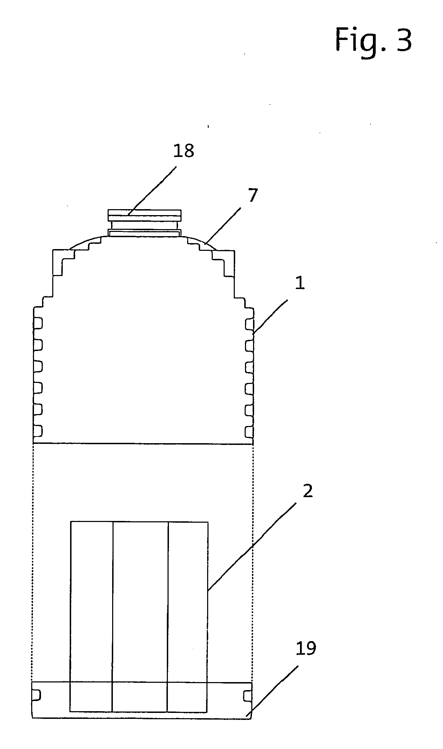

Fig. 3 zeigt eine Prinzipdarstellung eines frühen Herstellungsschrittes der Kleinkläranlage. Da eine Revisionsöffnung 18 am Schachtkopf 7 des Vorklärbehälters 1 einen zu geringen Querschnitt aufweist, um durch diese den Reaktorbehälter 2 einbauen zu können, wird der Vorklärbehälter während der Fertigung vorzugsweise an seinem unteren Ende aufgetrennt, so dass eine Bodenwanne 19 entsteht. Der Reaktorbehälter 2 kann daraufhin in der Bodenwanne 19 befestigt werden.

Es ist eine Verschraubung des Reaktorbehälters an der Bodenfläche der Bodenwanne 19 möglich. Bessere Ergebnisse werden allerdings erzielt, wenn der untere Rand des Reaktorbehälters umfangsseitig mit der Bodenfläche der Bodewanne dicht verschweißt wird, so dass zwischen dem Boden des Vorklärbehälters und dem Reaktorbehälter kein Wasser eindringen kann. Dadurch wird das Auftreten von unerwünschten Auftriebskräften vermieden, die andernfalls bei teilweise oder vollständig leerem Reaktorbehälter und gleichzeitig hohem Pegelstand im Vorklärbehälter auf den Reaktorbehälter wirken würden. Wenn die Bodenwanne 19 in ihre Höhe gering gehalten wird, können die erforderlichen Schweißarbeiten ohne Schwierigkeiten ausgeführt werden. Bei Anwendung einer solchen dichten Schweißverbindung kann zur Materialeinsparung auch der untere Boden des Reaktorbehälters weggelassen bzw. auf einen schmalen Rand reduziert werden. Zusätzlich zur Schweißnaht können Schrauben, Nieten oder Führungsbolzen für die vorläufige Fixierung des Reaktorbehälters und/oder die zusätzliche Befestigung im Vorklärbehälter vorgesehen sein.

Nachdem der Reaktorbehälter 2 in der Bodenwanne 19 befestigt wurde, wird der abgetrennte Teil des Vorklärbehälters 1 wieder mit der Bodenwanne 19 verbunden, insbesondere wasserdicht verschweißt. Es ist auch möglich, ein Zwischenstück zwischen dem oberen Abschnitt des Vorklärbehälters 1 und der Bodenwanne 19 einzusetzen, um damit das Volumen des Vorklärbehälters zu vergrößern, wenn bei dessen Herstellung keine größeren Formen zu Verfügung stehen.

Für Wartungszwecke ist es außerdem vorteilhaft, wenn im oberen Bereich des Reaktorbehälters 2 eine Trittfläche 20 dauerhaft verankert wird oder zumindest eine Befestigung zum Auflegen eine solchen Trittfläche vorgesehen ist. Die Trittfläche 20 kann auch integraler Bestandteil des Reaktorbehälters sein, beispielsweise indem sie als Abschnitte einer Deckelfläche gebildet ist. Im Wartungsfall kann ein Monteur dann über die Revisionsöffnung 18 in den Vorklärbehälter 1 einsteigen und für die Wartung der Aggregateeinheit oder der sonstigen Elemente der Kleinkläranlage einen sicheren Stand auf dieser Trittfläche finden.

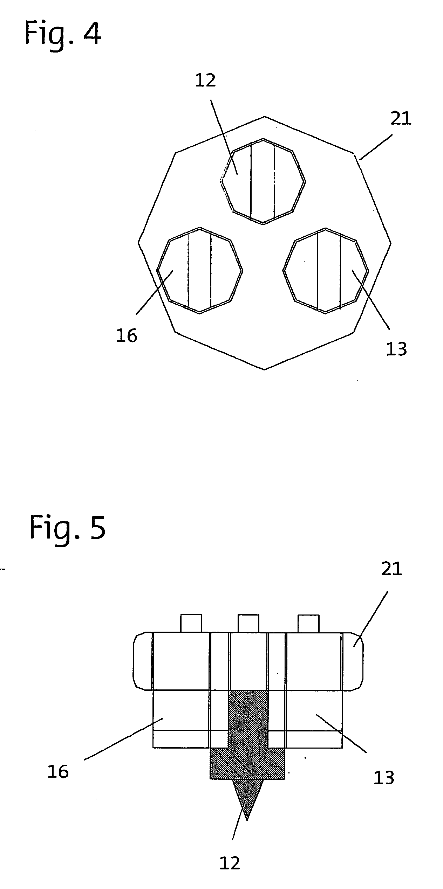

Fig. 4 zeigt Draufsicht eines Pontons 21, welcher alternativ zum Gestell der oben beschriebenen Aggregateeinheit für die Halterung der aktiven Elemente der Kleinkläranlage innerhalb des Reaktorbehälters eingesetzt werden kann. Fig. 5 zeigt den bestückten Ponton in einer Seitenansicht. Bei dem Ponton 21 handelt es sich um einen scheibenförmigen Hohlkörper aus Stahl oder Kunststoff, der in seinem Durchmesser bzw. äußeren Abmessungen an den lichten Querschnitt des Reaktorbehälters angepasst ist, um in diesen mit Spiel einsetzbar zu sein. In Fig. 4 ist eine achteckige Ausführungsform des Pontons 21 gezeigt. Der Ponton 21 schwimmt im Betrieb auf der Wasseroberfläche im Reaktorbehälter. Im Ponton 21 sind mehrere Geräteaufnahmeöffnungen vorgesehen, in welche Geräte wie z.B. der Belüfter 12, die Klarwasserpumpe 13 und die Schlammpumpe 16 eingesetzt werden können. Außerdem kann eine Führung vorgesehen sein, die eine axiale Führung des Pontons im Reaktorbehälter gestattet. Als Belüfter kann bei dieser Bauform ein Schraubenbelüfter verwendet werden, der durch eine entsprechende Rührbewegung von oben Luft in das Abwasser im Reaktorbehälter einträgt. Ein Vorteil des Pontons besteht vor allem in der leichten Zugänglichkeit zu den im Ponton befestigten Geräten. Um bei dieser Ausführungsform Überschussschlamm mit der in der Nähe der Wasseroberfläche befindlichen Schlammpumpe abpumpen zu können, wird der Überschussschlamm vor dem Abpumpen aufgewühlt (z.B. mit Hilfe des Schraubenbelüfters) und gleichmäßig im Wasser verteilt. Dies hat zudem den besonderen Effekt, dass sich die abzupumpende Schlammmenge besser dosieren lässt.

Weitere Abwandlungen und Ausführungsformen der Kleinkläranlage sind möglich. Auf das Material, aus welchem der Vorklärbehälter und der Reaktorbehälter hergestellt werden, kommt es für die Realisierung der Kleinkläranlage nicht vorrangig an. Üblicherweise werden diese Behälter aus Kunststoff hergestellt.

### Bezugszeichenliste

- 1 -: Vorklärbehälter
- 2 -: Reaktorbehälter
- 3 -: Hohlraum
- 4 -: Einlauf
- 5 -: Auslauf
- 6 -: Profilierung
- 7 -: Schachtkopf
- 8 -: Rohranschlussabschnitt
- 9 -: Überlauf
- 10 -: Schutzwand
- 11 -: Aggregateeinheit
- 12 -: Belüfter
- 13 -: Klarwasserpumpe
- 14 -: Klarwasserabzugsleitung
- 15 -: Probenbehälter
- 16 -: Schlammpumpe
- 17 -: Schlammleitung
- 18 -: Revisionsöffnung
- 19 -: Bodenwanne
- 20 -: Trittfläche
- 21 -: Ponton

## Patentansprüche

1. Kleinkläranlage nach dem SBR Sequence-Batch-Reaktor-Verfahren mit einem Vorklärbehälter (1), einem in diesem angeordneten Reaktorbehälter (2), einer Schmutzwasserzuleitung (4) in den Vorklärbehälter (1), einem vom Vorklärbehälter (1) in den Reaktorbehälter (2) verlaufenden Überlauf (9), durch welchen vorgeklärtes Abwasser bei Erreichen eines vorgegebenen Füllstandes im Vorklärbehälter (1) selbsttätig in den Reaktorbehälter (2) fließt, und mit einem zeitgesteuerten Klarwasserabzug (13, 14), über welchen Klarwasser zu vorgegebenen Zeiten aus dem Reaktorbehälter (2) abgepumpt wird.

2. Kleinkläranlage nach Anspruch 1, **dadurch gekennzeichnet, dass** der Überlauf (9) ein Tauchrohr zum Zurückhalten der im Vorklärbehälter (1) aufschwimmenden Stoffe ist.

3. Kleinkläranlage nach Anspruch 1, **dadurch gekennzeichnet, dass** um den Überlauf (9) eine Schutzwand (10) zum Zurückhalten der im Vorklärbehälter (1) aufschwimmenden Stoffe angeordnet ist.

4. Kleinkläranlage nach einem der Ansprüche 1 bis 3, **dadurch gekennzeichnet, dass** im Reaktorbehälter (2) ein Belüfter (12), insbesondere ein Tellerlüfter angeordnet ist.

5. Kleinkläranlage nach einem der Ansprüche 1 bis 4, **dadurch gekennzeichnet, dass** der Vorklärbehälter (1) einen Schachtkörper mit achteckigem Querschnitt und einer Vielzahl von zumindest teilweise umlaufenden Profilierungen (6) sowie einen einstückig an den Schachtkörper angeformten Schachtkopf (7) mit einem sich ausgehend vom Schachtkörper pyramidenstumpfartig verjüngenden Querschnitt besitzt, wobei mindestens zwei Seitenflächen des Schachtkopfes (7) einen Rohranschlußabschnitt (8) aufweisen, dessen Anschlußfläche im wesentlichen parallel zu der angrenzenden Seitenwand des Schachtkörpers verläuft.

6. Kleinkläranlage nach einem der Ansprüche 1 bis 5, **dadurch gekennzeichnet, dass** der Klarwasserabzug (13, 14) über einen Probenbehälter (15) geführt ist, und dass eine Klarwasserpumpe (13) im Reaktorbehälter (2) angeordnet ist.

7. Kleinkläranlage nach einem der Ansprüche 1 bis 6, **dadurch gekennzeichnet, dass** zum Abpumpen des Überschussschlamms aus den Reaktorbehälter (2) in den Vorklärbehälter (1) eine Schlammpumpe (16) vorhanden ist.

8. Kleinkläranlage nach einem der Ansprüche 1 bis 7, **dadurch gekennzeichnet, dass** der Reaktorbehälter (2) am Boden des Vorklärbehälters (1) befestigt ist.

9. Kleinkläranlage nach Anspruch 8, **dadurch gekennzeichnet, dass** der Reaktorbehälter (2) am Boden des Vorklärbehälters (1) derart angeschweißt ist, dass kein Wasser unter den Reaktorbehälter eindringen kann.

10. Kleinkläranlage nach einem der Ansprüche 1 bis 9, **dadurch gekennzeichnet, dass** zum Einsetzten des Reaktorbehälters (2) der untere Bereich (19) des Vorklärbehälters (1) abgetrennt und anschließend wieder angeschweißt wird.

11. Kleinkläranlage nach einem der Ansprüche 1 bis 10, **dadurch gekennzeichnet, dass** der Reaktorbehälter (2) an seinem oberen Ende eine Trittfläche (20) aufweist.

12. Kleinkläranlage nach einem der Ansprüche 1 bis 11, **dadurch gekennzeichnet, dass** alle aktiven Baueinheiten, wie Pumpen (13, 16), Belüfter (12) und dergleichen, an einem Aggregateträger (11) befestigt sind, der in den Reaktorbehälter (2) lösbar eingestellt ist.

13. Kleinkläranlage nach einem der Ansprüche 1 bis 11, **dadurch gekennzeichnet, dass** alle aktiven Baueinheiten, wie Pumpen (13, 16), Belüfter (12) und dergleichen, in einem Ponton (21) befestigt sind, der auf der Wasseroberfläche im Reaktorbehälter (2) schwimmt.

14. Kleinkläranlage nach einem der Ansprüche 1 bis 13, **dadurch gekennzeichnet, dass** der Klarwasserabzug (14) in einen Notüberlauf (5) des Vorklärbehälters (1) eingespeist wird.
